# EUROPÄISCHE PATENTSCHRIFT

(11) **EP 0 526 791 B1**
(45) Veröffentlichungstag und Bekanntmachung des Hinweises auf die Patenterteilung: **11.12.1996**
(21) Anmeldenummer: 92112319.6
(22) Anmeldetag: 18.07.1992
(51) Int. Cl.: B23Q 27/00

(54) **Verfahren und Vorrichtung zum Erzeugen der Durchdringungskurve zweier ineinanderzufügender Körper**
Process and apparatus for generating the intersection curve between two bodies to be assembled
Procédé et dispositif pour générer la courbe d'intersection de deux corps à assembler

(30) Priorität: 03.08.1991 DE 4125764
(43) Veröffentlichungstag der Anmeldung: 10.02.1993
(73) Patentinhaber: KREUZINGER, Franz, D-35423 Lich (DE)
(72) Erfinder: KREUZINGER, Franz, D-35423 Lich (DE)

(56) Entgegenhaltungen:
- DE-C- 930 781
- US-A- 1 923 778

## Beschreibung

Die Erfindung betrifft ein Verfahren und eine Vorrichtung zum Erzeugen der Durchdringungskurve zweier ineinander zu fügender zylindrischer Körper, insbesondere von Hohlkörpern mit unterschiedlichen Durchmessern und unter beliebigem Winkel, mittels zweier zusammenwirkender Kurbeltriebe sowie zur Übertragung der Durchdringungskurven-Bewegung auf die zylindrischen Körper.

Im Behälter- und Rohrleitungsbau ist es eine regelmäßige Aufgabe, die Abwicklungskurven für die aneinander zu fügenden Körper im Verbindungsbereich zu ermitteln und anschließend die Körper entsprechend dieser Abwicklungen zu bearbeiten. Es ist bekannt, mit Hilfe eines Zirkels den Umfang eines derartigen Abwicklung am zu erstellenden Rohr abzugreifen und dann auf das andere Rohr zu übertragen. Zur Vereinfachung dieser Methode wird in der DE-PS 930 781 eine Maschine vorgeschlagen, bei welcher das Herstellen von Abwicklungen, des Aufzeichnen von Schablonen und das Ausschneiden und runden der einzelnen Teile entfallt. Durch das Aufeinanderwirken zweier Kurbeltriebe, deren Kurbelzapfen auf die errechneten Werte der Amplituden eingestellt werden, kann im Zusammenwirken mit einem gleichzeitig sich drehenden Rohr auf dieses eine der Einstellung des Kurbelzapfen entstehende Kurve übertragen werden.
Nachteilig ist, daß die notwendige Einstellung vorher errechnet werden muß und für jedes der beiden zu verbindenden Rohrteile die Maschine neu eingestellt werden muß. Dies hat automatisch Ungenauigkeiten der tatsächlich entstehenden Kurven bzw. Rohrausschnitte zur Folge, so daß ein störungsfreier Ablauf beim Verbinden der Rohrteile nicht gewährleistet ist. Außerdem müssen die beiden zu verbindenden Rohrteile in zwei verscheidenden Arbeitsgängen nacheinander bearbeitet werden.
Es sind zwar inzwischen auch Vorrichtungen bekannt, bei denen über ein Computerprogramm die in Frage kommende Abwicklung errechnet und mit der errechneten Kurve die Vorrichtung gesteuert wird, aber in jedem Falle werden die Werkstücke nacheinander über die jeweils errechnete Steuerkurve bearbeitet. Hinzu kommt, daß elektronische Rechner anfällig sind, und es im rauhen Betrieb zu Ausfällen kommen kann, weil elektromagnetische Ströeinflüsse nicht auszuschließen sind. Die Bedienung einer solchen Maschine setzt außerdem Programmier-Kenntnisse voraus.

Der Erfindung liegt die Aufgabe zugrunde, mit einer einfach aufgebauten Maschine, welche ohne Schwierigkeit für die unterschiedlichsten Werkstücke zu bedienen ist, eine exakte Durchdringungskurve in kürzester Zeit zu erzeugen und diese auch die ineinander zu fügenden zylindrischen Körper möglichst gleichzeitig zu übertragen bzw. entsprechend zu bearbeiten.
Die erfindungsgemäße Aufgabe wird mit den in den unabhängigen Ansprüchen 1 und 4 angegebenen Merkmalen gelöst.

Die beiden schwimmend gelagerten Kurbeln führen bei einer der ineinander zu fügenden zylindrischen Körper nach Lage und Radius entsprechenden Einstellung eine räumliche Bewegung aus, welche der Durchdringungskurve entspricht. Diese räumliche Bewegung kann auf beide Körper bzw. ein Bearbeitungswerkzeug übertragen werden, so daß auf einfache Weise die gleichzeitige Bearbeitung von Rohren oder dgl. möglich ist und auch das Zusammenfügen dieser Teile auf derselben Vorrichtung gegeben ist. Die beiden Körper können dabei unter beliebigem Winkel zueinander liegen und auch unterschiedliche Durchmesser haben.

In der Zeichnung ist die Erfindung an Ausführungsbeispielen dargestellt. Es zeigen
- Fig. 1a - 1c: das der Erzeugung einer Durchdringungskurve zweier ineinander zu fügender Rohre zugrunde liegende Prinzip,
- Fig. 1d - 1g: schematisch die Übertragung der Durchdringungskurve auf zwei Werkstücke,
- Fig. 2: die perspektivische Sicht einer Vorrichtung mit Übertragung der Durchdringungskurven-Bewegung auf die zu bearbeitenden Rohre,
- Fig. 3: eine Vorrichtung mit Lagerung der zu bearbeitenden Rohre in Kugelpfannen,
- Fig. 4 u. 5: eine Vorrichtung zur Erzeugung einer Taumelbewegung des Werkzeugs
- Fig. 6: das Prinzip der Übertragung auf das Werkzeug bei stillstellenden Werkstücken
- Fig. 7: eine Kompensationsvorrichtung für die Konstanthaltung des Werkzeugabstandes zur Rohroberfläche während der Taumelbewegung

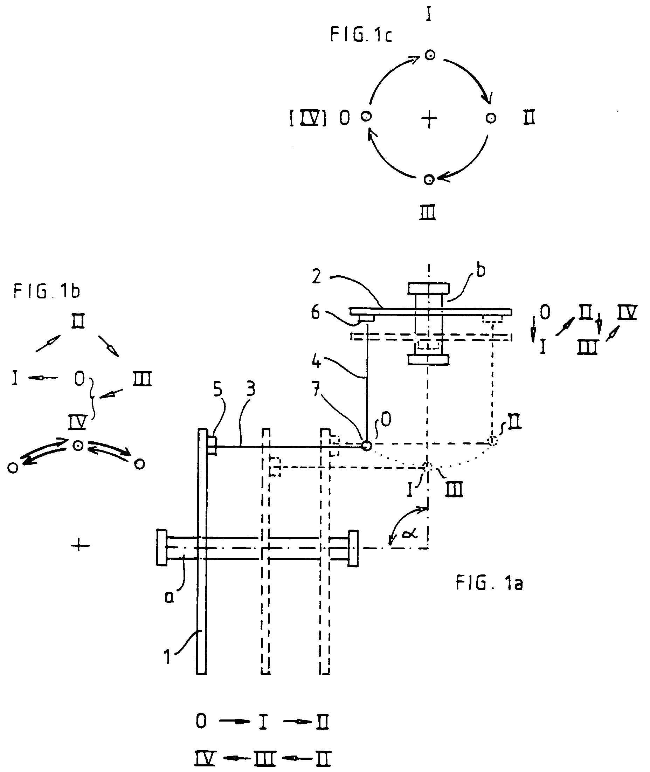

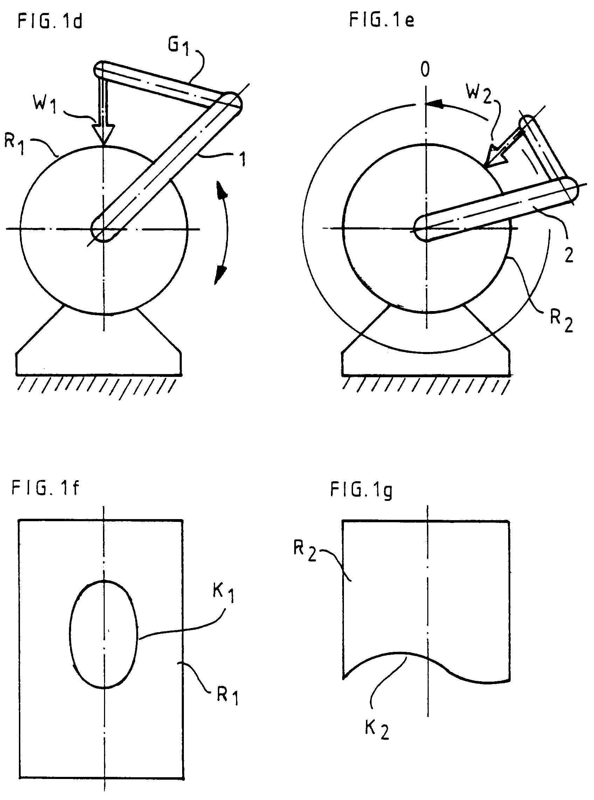

In der Prinzipskizze Fig. 1 a ist schematisch angedeutet, welche räumliche Bewegung durch die beiden Kurbeln 1 und 2 erzeugt wird. Die beiden Kurbeln 1 und 2 sind in ihrer jeweiligen Drehachsrichtung a bzw. b frei beweglich und über die Verbindungsstangen 3 und 4 miteinander verbunden. Die Verbindungsstangen 3 und 4 sind einerseits in den als Kurbelscheiben ausgebildeten Kurbeln bei 5 bzw. 6 drehbar gelagert und andererseits an ihren beiden aneinanderstoßenden Enden bei 7 gelenkig miteinander verbunden. Der Abstand der Verbindungsstangen zur Kurbeldrehachse ist durch die radiale Verstellmöglichkeit der Verbindungsstangen-Lager 5 und 6 beliebig einstellbar. Aus den Bewegungsskizzen 1b und 1c, welche den Kurbeln 1 und 2 (in Achsrichtung gesehen) zugeordnet sind, ist zu entnehmen, welche Bewegungen die Verbindungsstangen-Lager 5 bzw. 6 ausführen, wenn die kleinere Kurbel 2 eine Umdrehung über die Stationen 0-I-II-III-IV(0) durchführt. In der Ausgangsstellung 0 befinden sich die Verbindungsstangen-Lager 5 und 6 in der Kurbeldrehachsenebene an den mit 0 gekennzeichneten Punkten. Bei der Drehung der Kurbel 2 um 90° in Pfeilrichtung bewegt sich der Lagerpunkt der Verbindungsstange 4 in die Stellung I, damit wird zwangsläufig wegen der spielfreien Verbindung über den gemeinsamen Gelenkpunkt 7 und die frei-bewegliche Lagerung der Kurbeln die Kurbel 1 in die Stellung I gezogen. Gleichzeitig vollzieht der Lagerpunkt 5 an der Kurbel 1 eine Teilkreisbewegung in Stellung I, wodurch die Kurbel 2 ebenfalls in ihrer Kurbeldrehachsrichtung in Stellung I gezogen wird. Durch diese gleichzeitigen Bewegungen der Kurbeln in Kurbelwellenenachsrichtung und der Verbindungsstangen-Lager 5 und 6 auf Teilkreisbahnen führt der Gelenkpunkt 7 eine räumliche Bewegung durch, welche einen Teil der Durchdringungskurve von zwei Rohren mit Radien entsprechend den radialen Abständen der Verbindungsstangen-Lager 5 - 6 entspricht. Gleichzeitig wird dabei auch die gegenseitige Lage der Kurbelwellenachsen zueinander berücksichtigt, welche den Durchdringungswinkel darstellt. Bei der weiteren Drehung der Kurbel über die Stationen II, III und IV, wobei IV wieder dem Ausgangspunkt 0 entspricht, hat der Gelenkpunkt 7 die volle Durchdringungskurve durchlaufen.

Gleichsinnig mit dem Gelenkpunkt 7 haben sich alle Punkte der schwimmend gelagerten und frei beweglichen Vorrichtung bewegt.

Durch eine Vorrichtung, welche diese Bewegung auf die entsprechenden Rohre oder ein Werkzeug überträgt, ist es möglich, die Durchdringungskurve auf den Rohren aufzuzeichnen bzw. den Durchdringungsausschnitt herzustellen. Die Skizzen 1d und 1 e zeigen dies schematisch. Ein mit der Kurbel 1 über ein Gestänge G 1 verbundenes Werkzeug W 1 führt mit seiner Spitze relativ zu dem Rohr R 1 die in Fig. 1 f angedeutete Kurve K 1 aus. Gleichzeitig umfährt das an der Kurbel 2 angebrachte Werkzeug W 2 bei dervollen Umdrehung der Kurbel 2 das Rohr R 2 über den ganzen Umfang und führt dabei die in Fig. 1 g angedeutete Kurve K 2 aus.

Der Rohrausschnitt K 1 am Rohr mit dem größeren Durchmesser und das am kleineren Rohr R 2 erzeugte Endprofil K 2 sind beim Aneinanderfügen in genauer Übereinstimmung. Wie man gedanklich nachvollziehen kann, erhält man für jeden möglichen einstellbaren radialen Abstand der Verbindungsstangen-Lager und des Winkels α der Kurbelwellenachsen zueinander eine Durchdringungskurve, welche der zweier Rohre mit den entsprechenden Radien entspricht, die sich unter dem Winkel α einander durchdringen sollen.

Für die praktische Anwendung dieses Prinzips sind verschiedene Ausführungsmöglichkeiten denkbar.

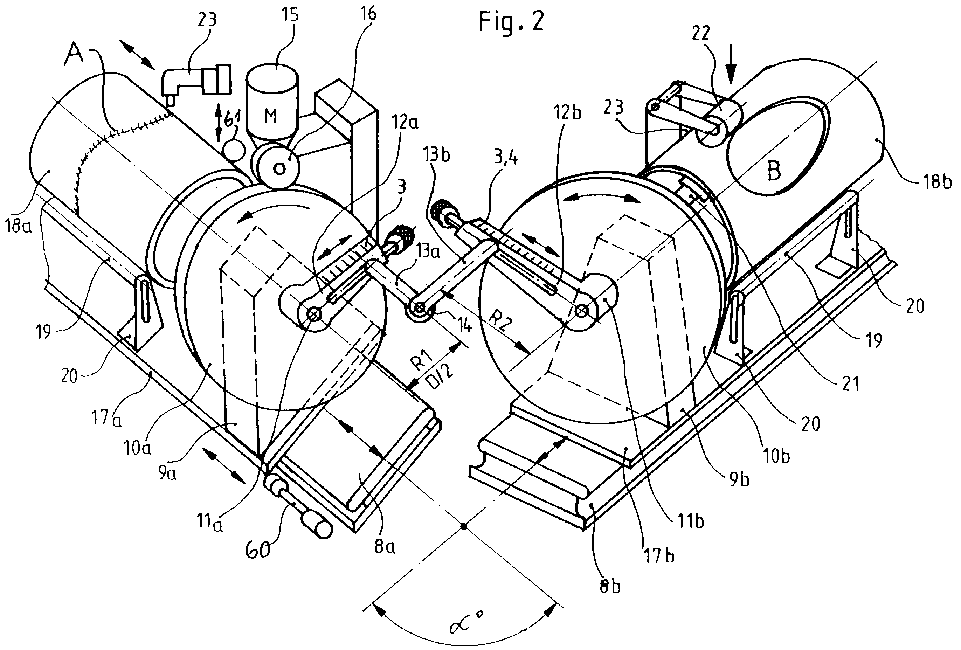

Fig. 2 zeigt ein Ausführungsbeispiel für eine Vorrichtung zur Übertragung der Durchdringungskurven-Bewegung der schwimmend gelagerten und spielfrei miteinander verbundenen Kurbeln auf eine entsprechende relative Bewegung zwischen den zu bearbeitenden Werkstücken und einem Werkzeug.

Auf linearen Führungseinheiten 8 a und 8 b, welche stufenlos im Winkel α zueinander einstellbar sind, ist je ein verschiebbar gelagerter Lagerbock 9 a und 9b vorgesehen, welche die Kurbeln 10 a und 10 b in Form von Kurbelscheiben tragen. Die Kurbelwellenachsen verlaufen parallel den Linearführungen der Führungseinheiten 8 a und 8 b. Die Kurbelscheiben weisen radial zu den Kurbeldrehachsen 11a und 11b verlaufende Führungsarme 12a und 12b auf, in denen Verbindungsstangen 13a und 13b drehbar gelagert sind. Sie sind mit Skalen versehen, an denen der radiale Abstand zur Kurbelwellenachse ablesbar ist. Der Verbindungsstangen-Lagerpunkt in den Führungsarmen 12a bzw. 12b kann innerhalb des Führungsbereichs beliebig festgelegt werden. Die Verbindungsstangen 13a und 13b sind an ihren aneinanderstoßenden Enden gelenkig aber spielfrei miteinander verbunden, z.B. durch ein Kardangelenk 14. Die Kurbelscheibe 10a, an welcher der kleinere radiale Abstand für die Verbindungsstange eingestellt wird, ist über den Motor 15 und das Antriebsrad 16 in Pfeilrichtung um die Kurbelwellenachse 11 a drehbar. Auf den Trägern 17a und 17b der Lagerböcke 9a und 9b sind Aufnahmevorrichtungen für die zu bearbeitenden Rohre 18 a und 18 b vorgesehen. Sie bestehen aus höhenverstellbaren Tragrollen 19, die vorteilhaft auch in seitlich verstellbaren Rollenböcken 20 gelagert sind. Auf diese Weise ist es möglich, die Rohre 18a und 18b in die gewünschte Lage zu den Kurbelscheiben zu bringen. Über ein Kreuzgelenk 21 oder eine andere geeignete Schlepp- bzw. Spannvorrichtung sind die Rohre 18a und 18b so mit den Kurbelscheiben verbunden, daß sie dieselbe Bewegung wie diese ausführen. Durch zusätzliche Andrückrollen 22 kann eine stabile Lage der Rohre gesichert werden. Anhand der Fig. 1 a ist erläutert worden, daß bei dieser Anordnung die Bewegung der Kurbeln der räumlichen Durchdringungskurve entspricht, und zwar für Rohre mit Halbmessern, welche dem radialen Abstand der Verbindungsstangen und dem eingestellten Winkel α, unter welchem die beiden Rohre sich durchdringen sollen, entspricht. Da die Rohre 18 a und 18 b dieselbe Bewegung wie die Kurbelscheiben ausführen, würde durch einen die Rohre berührenden Plottstift auf diesen die Durchdringungskurve abgebildet. Ein Werkzeug, z.B. der in Fig. 2 angedeutete Schneidbrenner 23 würde das zugehörige Rohr entsprechend bearbeiten. Das bedeutet, daß gleichzeitig auf beiden Rohren die zueinander passenden Rohrausschnitte bzw. Rohrstutzen hergestellt werden können. Während im Ausführungsbeispiel nach Fig. 2 der Schneidbrenner 23 am kleinen Rohr 18 a entsprechend der Durchdringungskurve A abtrennt, wird über einen anderen nicht gezeichneten Schneidbrenner in das Rohr 18 b ein Ausschnitt B ausgeschnitten, in welchen der Rohrstutzen mit seinem Stutzenende gem. der Bahn A genau paßt.

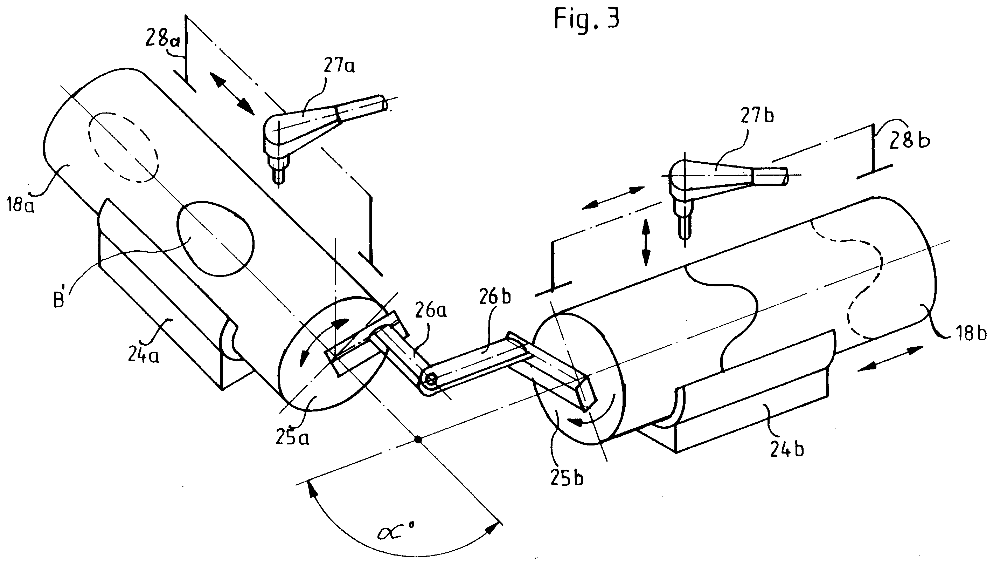

In Anwendung des erfingungsgemäßen Prinzips sind auch andere Möglichkeiten der Übertragung der Durchdringungskurven-Bewegung denkbar. Bei dem Schema gem. Fig. 3 sind die Rohre 18a und 18b in Kugelpfannen 24 a und 24 b so gelagert, daß sie in Rohrachsrichtung linear bewegbar sind. In den Rohrenden sind Spannvorrichtungen 25 a und 25 b eingesetzt, welche die Verbindungsstangen 26a und 26 b tragen. Der Antrieb kann über eine Lagerrolle oder die nicht gezeichnete Andruckrolle auf das Rohr mit dem kleineren Durchmesser erfolgen. Der Bewegungsablauf entspricht dann ebenfalls den Beispielen gemäß den Figuren 1 und 2, und die Brenner 27a und 27b erzeugen an den Rohren die gewünschten Aus- bzw. Abschnitte. Die Brenner 27a und 27b sind zweckmäßig auf einem seitlich der linearen Führungseinheit für die Rohre angeordneten Werkzeugträger 28a bzw. 28b angeordnet, der an jede gewünschte Stelle verfahrbar ist, so daß die Rohre in dem jeweils gewünschten Bereich bearbeitet werden können.

Anstelle eines Schneidbrenners können auch andere Werkzeuge, wie z.B. eine Hochdruckwasserstrahl-Einheit, ein Fräser, eine Säge, eine Schleif- oder Poliereinheit, eine Bürste, ein Laser-Brenner oder ein Plasma-Brenner eingesetzt werden. Auch ist es möglich, an einem Werkstück gleichzeitig mehr als ein Werkzeug einzusetzen. Desgleichen ist es möglich, auf dem zu bearbeitenden Rohr ein Papier oder eine Folie zu befestigen und über einen Plottstift auf die rotierenden bzw. oszillierenden Rohre die Abwicklung aufzuzeichnen.

Die zu bearbeitenden Rohre haben eine bestimmte Wanddicke, weshalb beim Ineinanderfügen zweier Werkstücke nicht eine einfache Durchdringungslinie im gegenseitigen Berührungsbereich vorliegt, sondern ein der Wanddicke entsprechendes Berührungsband. Es ist wünschenswert, wenn dieses zwischen Außen- und Innendurchmesser verlaufende Berührungsband ebenfalls möglichst genau aufeinander abgestimmt ist, oder daß für das spätere miteinander Verschweißen die erforderliche Schweißfase bereits miterzeugt wird. Dies gilt insbesondere bei dem in das Rohr mit größeren, Durchmesser anzubringenden Ausschnitt für das in diesen einzusetzenden Rohrstutzen mit kleinerem Durchmesser, beispielsweie in Fig. 2 der Auschnitt B oder in Fig. 3 der im Rohr 18a angedeutete Ausschnitt B'. Bei einem sich oszillierend bewegenden Rohr und einem stationären Schneidbrenner führt der Schneidbrenner zur Herstellung des gewünschten Durchdringungsbandes eine Taumelbewegung durch, deren theoretischer Drehpunkt auf der inneren Tangente des Rohrinnendurchmessers im Schnittpunkt des Brennstrahls liegt.

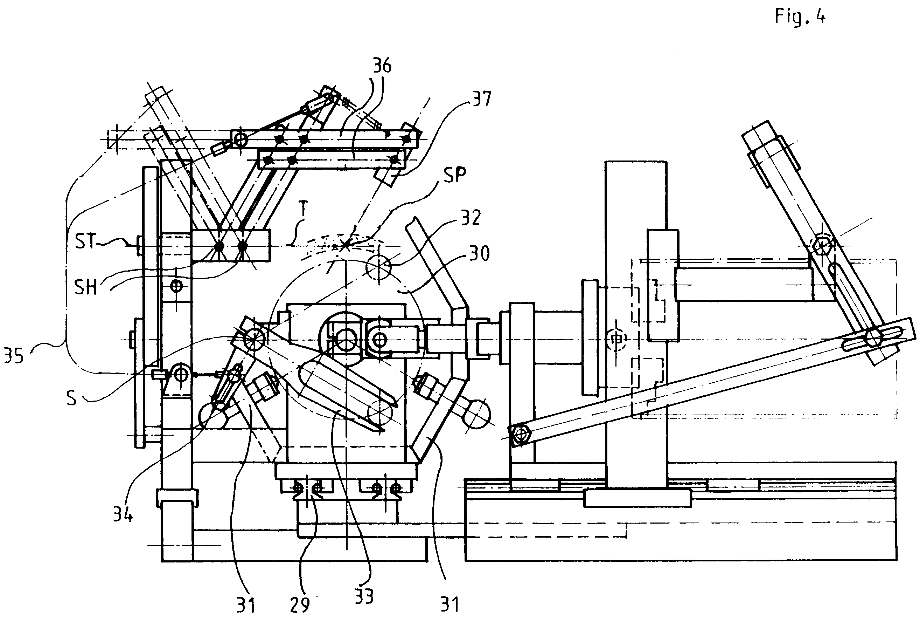

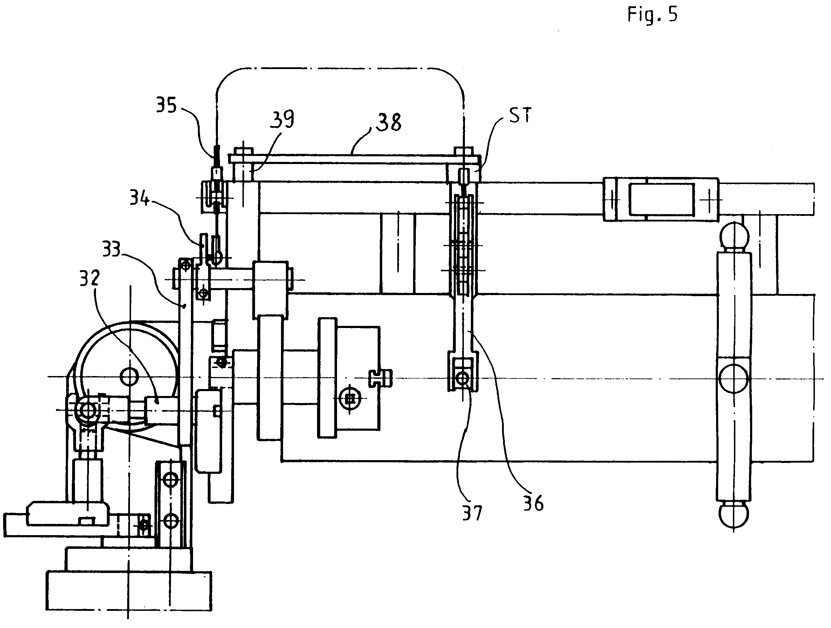

In Fig. 4 ist an einer Ansicht in Drehachsrichtung auf das größere Rohr gezeigt, wie diese Taumelbewegung durch Abgreifen der Verbindungsstangenbewegung erzeugt wird. Auf dem Liniarschlitten 29 ist die Kurbelscheibe 30 sowie die Rollenlagerung 31 für das zu bearbeitende Rohr angebracht. Der Verbindungsstangenquerschnitt ist mit 32 angedeutet. Die osziellierende Bewegung der Verbindungsstange 32 wird von dem Finger 33 abgegriffen, welcher dabei eine Schwenkbewegung um den Schwenkpunkt S durchführt, welche ihrerseits über den Hebel 34, den mit diesem verbundenen Bowdenzug 35 sowie das Hebel-Prallelogramm 36 auf die Brennerhalterung 37 übertragen wird. Es ist die Stellung der Übertragungselemente in der einen Extremstellung eingezeichnet, und die andere Extremstellung ist strichpunktiert angedeutet. Für eine Taumelbewegung des Werkzeughalters 37 um den theoretischen Schnittpunkt SP von Brennerstrahl und Tangente an den Innenrohrdurchmesser ist es notwendig, daß auch die Rohrbewegung in Rohrlängsachse auf das den Werkzeughalter 37 tragende Hebel-Parallelogramm 36 übertragen wird. Hierzu ist das Hebel-Parallelogramm 36 nicht nur um die auf der Tangente T außerhalb des Rohres angeordneten Schwenkpunkte SH in Rohrquerschnittsebene schwenkbar, sondern gleichzeitig auch um den in Tangentenachse liegenden Schwenkpunkt ST. Die Fig. 5, welche die Seitenansicht der Anordnung gem. Fig. 4 zeigt, soll verständlich machen, in welcher Weise die gleichzeitige Schwenkbewegung um den Punkt ST in Abhängigkeit von der axialen Rohrbewegung bewirkt wird.
Das Übertragungssystem der Oszillationsbewegung, bestehend aus Verbindungsstange 32, Finger 33, Hebel 34, Bowdenzug 35, Hebel-Parallelogramm 36 und Werkzeughalter 37 ist nochmals bezeichnet. Ergänzend ist die Schwinge 38 zu erkennen, welche bei der Verschiebung der Kurbel in Rohrachsrichtung diese Axialbewegung über den Fühler 39 auf die Schwinge 38 und von dieser auf das Hebel-Parallelogramm 36 durch dessen Verschwenken um den Punkt ST in Rohraxialebene übersetzt. Die beiden gleichzeitigen Bewegungen des Hebel-Parallelogrammes um die Schwenkpunkte SH und ST rufen die gewünschte Taumelbewegung des Werkzeughalters 37 um den theoretischen Schnittpunkt SP hervor. Die infolge dieser Bewegung beim Brennschneiden gebildete Schnittfläche der Rohrwandung hat im räumlichen Verlauf genau die Form des in sie einzufügenden Gegenrohrstückes. Durch zusätzliche Winkelverstellung des Werkzeughalters 37 kann gleichzeitig die gewünschte Schweißfase erzeugt werden.

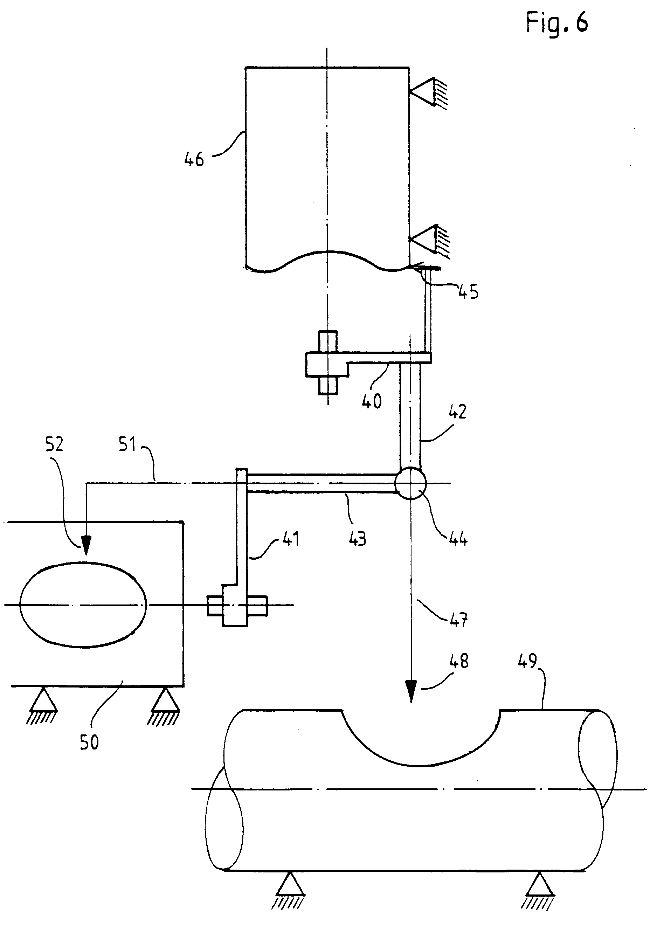

Während bei den Ausführungsbeispielen gemäß der Figuren 2, 3, 4 und 5 die Durchdringungskurven-Bewegung der Kurbeln auf die zu bearbeitenden Werkstücke übertragen wird, kann diese selbstverständlich auch auf die Werkzeuge bei stillstehenden Werkstücken übertragen werden. Es kommt nämlich nur auf die Relativbewegung zwischen Werkstück und Werkzeug an. Bei großen und schweren Werkstücken kann dies von Vorteil sein. Fig. 6 zeigt die Prinzipskizze für eine derartige Anordnung. Die schmatisch angedeuteten Kurbeln 40 und 41, welche über die Verbindungsstangen 42 und 43 am Gelenkpunkt 44 miteinander verbunden sind, führen dieselbe Funktion aus wie die Kurbeln 1 und 2 in Fig. 1 a.

An der kleineren Kurbel 40, welche eine volle Umdrehung ausführt, ist das verstellbare Werkzeug 45 so angebracht, daß es das kleinere feststehende Rohr 46 bei einer Kurbelumdrehung außen über den ganzen Rohrumfang umfährt und dabei den gewünschten Verlauf des Rohrstutzenendes erzeugt. Am Gelenkpunkt 44 ist außerdem ein weiterer Werkzeugträger 47 angebracht, an dessen Ende ein Werkzeug 48 angeordnet ist, welches bei einer Kurbelumdrehung dieselbe Bewegung wie das Werkzeug 45 ausführt, dabei aber in dem größeren feststehenden Rohr 49 den zum Rohrstutzen 46 passenden Ausschnitt erzeugt, so daß an beiden Werkstücken zu gleicher Zeit eine Bearbeitung durchgeführt wird. Die beiden Werkstücke sind anschließend genau aneinanderfügbar, z.B. durch Verschweißen. Mit dem Rohr 50 und der weiteren Anordnung eines Werkzeugträgers 51 mit dem Werkzeug 52 soll angedeutet werden, auf welch unterschiedliche Weise die Kurbelbewegung auf die Werkstücke übertragen werden kann.

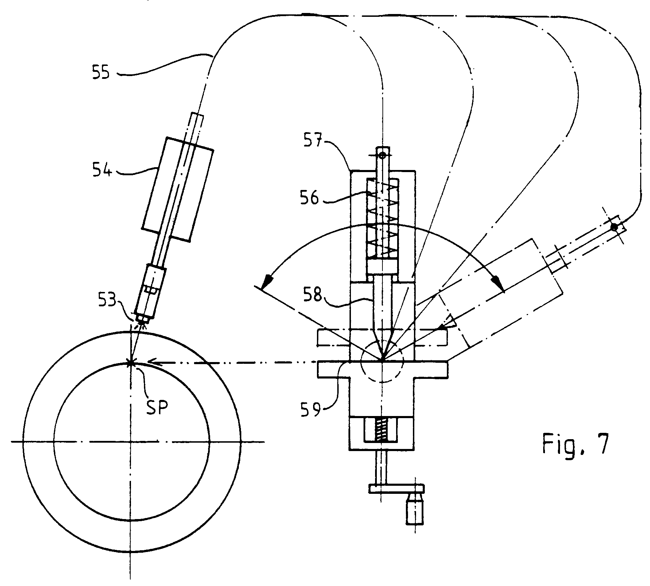

Beim Einsatz bestimmter Werkzeuge kommt es darauf an, daß während der Werkstückbearbeitung der Abstand zur Werkstückoberfläche möglichst konstant gehalten wird, insbesondere bei Schneid- und Schweißbrennern ist dies zu beachten. Zwischen der Werkstückoberfläche und der Düsenöffnung eines Schneidbrenners ist ein gewisser Abstand zur Flammenbildung notwendig. Anhand der Fig. 4 und 5 wurde erläutert, daß der Werkzeughalter zur Herstellung einer genau angepaßten Durchdringungsbahn eine Taumelbewegung um den Schnittpunkt SP von Brennerstrahl und Tangente an den Innenrohrdurchmesser durchführen soll. Wegen des naturbedingten Abstandes vom Schnittpunkt SP und der Düsenöffnung des Schneidbrenners ändert sich der Abstand der Düsenöffnung zur Rohroberfläche während dieser Taumelbewegung. Am stärksten ist der Einfluß bei der Schwenkbewegung in Rohrlängsachse. In Fig. 7 ist eine Vorrichtung dargestellt, welche die bei der Taumelbewegung des Werkzeugs entstehenden Unterschiede zwischen Brennerdüse und Rohroberfläche weitgehend ausgleicht. Die Brennerdüse 53 ist im Werkzeughalter 54 höhenverschiebbar gelagert und über eine bewegliche Verbindung 55 mit dem unter Federdruck 56 in dem Halter 57 angeordneten Taster 58 verbunden. Der Taster 58 wird von einer Tastplatte 59 gesteuert. Die Tastplatte 59 wird hierzu auf die Höhe des Schnittpunktes SP (innerer Punkt der Rohrwandstärke) eingestellt. Der Taster 58 schwenkt im selben Sinne wie der Werkzeughalter 54, da er an dessen Schwenkmechanismus gekoppelt ist. Dabei ändert der Taster 58 seine Lage im Halter 57, weil sich sein Abstand zur Tastplatte 59 verändert. Diese Veränderung wird in Umkehrwirkung auf die Brennerdüse 53 übertragen. Hierdurch wird erreicht, daß der Abstand der Brennerdüse zur Rohroberfläche in axialer Richtung trotz Taumelbewegung kostant bleibt. Die Tastplatte 59 ist über eine Einstellvorrichtung ohne Schwierigkeit auf jede beliebige Rohrwandstärke einstellbar.

Anstatt einer mechanischen Übertragung der Durchdringungskurven-Bewegung auf die Werkstücke bzw. Werkzeuge ist es auch möglich über eine Steuereinheit die Durchdringungskurven-Bewegung zu erfassen und auf Drehgeber 60 bzw. 61 an den linearen Führungseinheiten oder für die Rohrumdrehung (wie in Fig. 2 angedeutet) zu übertragen. Ebenso kann der Abstand der Werkzeuge von der Werkstückoberfläche hydraulisch, motorisch oder dgl. gesteuert werden.

Es ist auch zweckmäßig, die relative Geschwindigkeit zwischen Werkstück und Werkzeug so zu regeln, daß eine regelmäßige Schnittgeschwindigkeit erzielt wird.

## Patentansprüche

1. Verfahren zum Erzeugen der Durchdringungskurve zweier ineinander zu fügender zylindrischer Körper, insbesondere von Hohlkörpern mit unterschiedlichen Durchmessern und unter beliebigem Winkel, mittels zweier zusammenwirkender Kurbeltriebe sowie zur Übertragung der Durchdringungskurven - Bewegung auf die zylindrischen Körper, gekennzeichnet durch,
a) die Ausbildung und Anordnung von zwei schwimmend gelagerten Kurbeln (1, 2) derart, daß diese
- in Kurbeldrehachsen-Richtung (a, b) frei bewegbar geführt sind,
- je eine zur Kurbeldrehachse radial verstellbare Verbindungsstange (3, 4) aufweisen, welche an der jeweiligen Kurbel um ihre Längsachse drehbar gelagert und an ihren freien Enden gelenkig und spielfrei miteinander verbunden sind, wobei
b) eine der Durchdringungskurve zweier zylindrischer Körper entsprechende räumliche Bewegung der Kurbeln (1,2) und Verbindungsstangen (3, 4) dadurch erzeugt wird, daß die Lage der Kurbeldrehachsen (a, b) zueinander sowie der radiale Abstand der Verbindungsstangen (3, 4) gegenüber den Kurbeldrehachsen (a,b) entsprechend der Lage und den Radien der ineinander zu fügenden Körper eingestellt und dann die Kurbeln bewegt werden und
c) zum Kennzeichnen und/oder Bearbeiten der ineinander zu fügenden Körper die Durchdringungskurven - Bewegung der Kurbeln (1, 2) und Verbindungsstangen (3, 4) als Relativbewegung zwischen je einer Bearbeitungseinheit (W 1, W 2) und den ineinander zu fügenden Körpern (R 1, R 2) im Bereich der Durchdringungsbahn übertragen wird.

2. Verfahren nach Anspruch 1,
dadurch gekennzeichnet, daß zur Erzeugung der Durchdringungskurven-Bewegung die Kurbel (2) mit dem kleineren eingestellten radialen Abstand der Verbindungsstange (4) zu einer vollen Umdrehung gebracht wird.

3. Verfahren nach Anspruch 2,
dadurch gekennzeichnet, daß die Durchdringungskurven-Bewegung gleichzeitig in den Bereich der Durchdringungsbahn eines jeden der ineinander zu fügenden Körper übertragen wird .

4. Vorrichtung zur Durchführung des Verfahrens nach einem oder mehreren der Ansprüche 1 bis 3 mit zwei zusammenwirkenden Kurbeltrieben, gekennzeichnet durch zwei Lagerböcke (9a, 9b) von denen jeder eine Kurbel (10 a, 10 b) aufweist, wobei
a) die Lagerböcke (9a, 9 b) und/oder Kurbeln (10 a, 10 b) in Führungsbahnen parallel der Kurbeldrehachsen (11 a, 11b) bewegbar geführt sind,
b) die Führungsbahnen im Winkel (α) zueinander verstellbar sind,
c) die Kurbeln (10 a, 10b) über Verbindungsstangen (13 a, 13 b) miteinander verbunden sind, welche einerseits an den Kurbeln in ihrer Längsachse drehbar und radial zur Kurbeldrehachse verstellbar gelagert, während sie andererseits an ihren freien Enden gelenkig und spielfrei miteinander verbunden sind, sowie
d) Mittel zur Übertragung der Durchdringungskurven - Bewegung der Kurbeln und Verbindungsstangen und zur Erzeugung einer Relativbewegung zwischen den zylindrischen Körpern und je einer Bearbeitungseinheit entsprechend den Durchdringungskurven vorgesehen ist.

5. Vorrichtung nach Anspruch 4,
gekennzeichnet durch auf linearen Führungseinheiten (8a, 8b) geführte Lagerböcke (9a, 9b), welche auf ihrer einen Seite die miteinander verbundenen Kurbeln (10a, 10b) und auf ihrer anderen Seite Schleppvorrichtungen aufweisen, welche die räumliche Kurbelbewegung gleichsinnig auf die zu bearbeitenden zylindrischen Körper (18 a, 18 b) übertragen.

6. Vorrichtung nach Anspruch 5,
dadurch gekennzeichnet, daß die Schleppvorrichtung als eine die zylindischen Körper (18a, 18 b) axial zur Kurbeldrehachse (11 a, 11b) aufnehmendes Spannfutter ausgebildet ist.

7. Vorrichtung nach einem oder mehreren der Ansprüche 4-6, dadurch gekennzeichnet, daß zwei auf einem Grundgestell angeordnete lineare Führungseinheiten (8a, 8b) mit Kugelführung vorgesehen sind, welche an einer Skala ablesbar gegeneinander im Winkel stufenlos verstellbar sind.

8. Vorrichtung nach einem oder mehreren der Ansprüche 4-7,
dadurch gekennzeichnet, daß die zu bearbeitenden zylindrischen Körper (18a, 18b) auf in der Höhe und/oder Breite verstellbaren Tragrollen (19) gelagert sind.

9. Vorrichtung nach einem oder mehreren der Ansprüche 4-7,
dadurch gekennzeichnet, daß als Auflage für die zylindrischen Körper Kugelpfannen (24 a, 24 b) dienen.

10. Vorrichtung nach einem oder mehreren der Ansprüche 4-9,
gekennzeichnet durch mindestens eine das Werkstück auf seiner Lagerung haltende Andrückrolle (22).

11. Vorrichtung nach einem oder mehreren der Ansprüche 4-10,
gekennzeichnet, daß mindestens eine Tragrolle (19) oder eine Andrückrolle (22) den Antrieb bildet, und die zylindrischen Werkstücke (18a, 18b) an ihren Enden Spannvorrichtungen (25 a, 25b) aufweisen, welche tangential zum jeweiligen Durchmesser des Werkstückes Kurbeltriebe tragen.

12. Vorrichtung nach einem oder mehreren der Ansprüche 4-11,
dadurch gekennzeichnet, daß seitlich neben den linearen Führungseinheiten (8a, 8b) mindestens ein in seiner Lage verstellbarer Werkzeughalter (37) für eine Bearbeitungseinheit angeordnet ist.

13. Vorrichtung nach Anspruch 12,
dadurch gekennzeichnet, daß mindestens eine der Bearbeitungseinheiten derart gesteuert wird, daß sie eine spiegelbildliche Abwicklungskurve erstellt.

14. Vorrichtung nach einem oder mehreren der Ansprüche 4-13
dadurch gekennzeichnet, daß für die Herstellung einer außermittigen Durchdringungsbahn die Kurbeln (1, 2, 10a, 10b) auf unterschiedlichen Abstand ihrer Kurbeldrehachsen-Ebenen zueinander einstellbar sind.

15. Vorrichtung nach einem oder mehreren der Ansprüche 4-14,
dadurch gekennzeichnet, daß der Werkzeughalter (37) eine von der Werkstückbewegung abhängig gesteuerte Taumelbewegung während der Werkstückbearbeitung durchführt, wobei der theoretische Drehpunkt der Taumelbewegung vom Schnittpunkt (SP) der Werkzeugachse und der Tangente (T) zum Bearbeitungspunkt am Werkstück gebildet wird

16. Vorrichtung nach Anspruch 15,
dadurch gekennzeichnet, daß der theoretische Drehpunkt der Taumelbewegung des Werkzeughalters im Bereich des größeren zu bearbeitenden Rohres an der Tangente (T) des inneren Rohrinnendurchmessers liegt.

17. Vorrichtung nach Anspruch 15 oder 16,
dadurch gekennzeichnet, daß die Übersetzung der Werkstückbewegung in eine Taumelbewegung des Werkzeughalters (37) über ein Hebel-Parallelogramm (36) erfolgt, welches außerhalb des zu bearbeitenden Rohres auf der Tangente zum Schnittpunkt (SP) einen Schwenkpunkt (ST) in Rohraxialebene sowie einen Schwenkpunkt (SH) in Rohrradialebene aufweist, wobei die Rohraxialbewegung und die Rohrradialbewegung auf das Hebel-Parallelogramm übertragen wird.

18. Vorrichtung nach einem oder mehreren der Ansprüche 4-17,
dadurch gekennzeichnet, daß der Schwenkwinkel des Werkstückhalters (37) zur Veränderung des Bearbeitungswinkels zwischen Werkstück und Werkzeug veränderbar ist.

19. Vorrichtung nach einem oder mehreren der Ansprüche 4-18,
gekennzeichnet durch eine den Abstand des Werkzeuges zu der Rohroberfläche während der Taumelbewegung des Werkzeughalters konstant haltende Kompensationsvorrichtung (59, 58, 56, 57)

20. Vorrichtung nach einem oder mehreren der Ansprüche 4-19,
gekennzeichnet durch eine Steuervorrichtung, welche die Bahngeschwindigkeit des Werkzeuges gegenüber der zu bearbeitenden Werkstückoberfläche konstant hält

21. Vorrichtung nach einem oder mehreren der Ansprüche 4-20,
dadurch gekennzeichnet, daß sie als Mastereinheit ausgebildet ist, welche die Bewegungsvorgäng einer "Teach-in-Elektronik" eingibt, von welcher diese auf die tatsächliche Dimension transformiert werden.

## Claims

1. A process for generating the intersection curve between two cylindrical bodies to be assembled, in particular hollow bodies with different diameters and at any desired angle, by means of two cooperating crank mechanisms, and for transmitting the movement of said intersection curve to said cylindrical bodies, characterized by
a) the design and arrangement of two floatingly supported cranks (1, 2) in such a manner that said cranks
- are guided in a freely movable manner in direction (a, b) of the axes of rotation of said cranks,
- comprise each a connecting rod (3, 4) which is radially adjustable relative to said rotational crank axis and is supported on the respective crank to rotate about the longitudinal axis thereof, said connecting rods being interconnected at their free ends in an articulated manner and without play,
b) a three-dimensional movement of said cranks (1, 2) and connecting rods (3, 4) which corresponds to the intersection curve of two cylindrical bodies being generated in that the position of the rotational crank axes (a, b) relative to each other and the radial distance of said connecting rods (3, 4) relative to said rotational crank axes (a, b) are adjusted in accordance with the position and the radii of the bodies to be assembled, and said cranks being then moved, and
c) the intersection curve movement of said cranks (1, 2) and connecting rods (3, 4) being transmitted as a relative movement between a respective machining unit (W1, W2) and the bodies (R1, R2) to be assembled in the area of the intersection path for marking and/or machining the bodies to be assembled.

2. The process according to claim 1, characterized in that for producing the movement corresponding to said intersection curve, the crank (2) which is adjusted to the smaller radial distance to said connecting rod (4) is brought to a full turn.

3. The process according to claim 2,
characterized in that said intersection curve movement is simultaneously transmitted into the area of the intersection path of each of said bodies to be assembled.

4. An apparatus for performing the process according to one or more of claims 1 to 3 with two cooperating crank mechanisms, characterized by two bearing blocks (9a, 9b) of which each comprises a crank (10a, 10b), wherein
a) said bearing blocks (9a, 9b) and/or said cranks (10a 10b) are movably guided in guide paths in parallel with said rotational crank axes (11a, 11b),
b) said guide paths are adjustable relative to each other at an angle (α),
c) said cranks (10a, 10b) are interconnected via connecting rods (13a, 13b) which, on the one hand, are rotatably supported on said cranks in the longitudinal axis thereof and radially adjustably relative to said rotational crank axis while, on the other hand, they are interconnected at their free ends in an articulated manner and without play, and
d) a means is provided for transmitting the intersection curve movement of said cranks and connecting rods and for generating a relative movement between said cylindrical bodies, and a respective machining unit in accordance with said intersection curves.

5. The apparatus according to claim 4,
characterized by bearing blocks (9a, 9b) which are guided on linear guide units (8a, 8b) and which comprise said interconnected cranks (10a, 10b) at their one side and drag devices at their other side for transmitting the three-dimensional crank movement in the same sense to the cylindrical bodies (18a, 18b) to be machined.

6. The apparatus according to claim 5,
characterized in that said drag device is designed as a chuck which receives said cylindrical bodies (18a, 18b) in a direction axial to said rotational crank axis (11a, 11b).

7. The apparatus according to one or more of claims 4 to 6, characterized in that there are provided two linear guide units (8a, 8b) which are arranged on a base frame and include a ball guide and which are continuously adjustable relative to each other at an angle in a manner to be readable on a scale.

8. The apparatus according to one or more of claims 4 to 7, characterized in that said cylindrical bodies (18a, 18b) to be machined are supported on carrier rolls (19) which are adjustable in their height and/or width.

9. The apparatus according to one or more of claims 4-7, characterized in that ball cups (24a, 24b) serve as a support for said cylindrical bodies.

10. The apparatus according to one or more of claims 4 to 9, characterized by at least one press-on roll (22) which holds a workpiece on its support.

11. The apparatus according to one or more of claims 4 to 10, characterized in that at least one support roll (19) or a press-on roll (22) forms the drive, and said cylindrical workpieces (18, 18b) have their ends provided with clamping devices (25a, 25b) which carry crank mechanisms tangentially relative to the respective diameter of said workpiece.

12. The apparatus according to one or more of claims 4 to 11, characterized in that at least one tool holder (37) which is adjustable in its position is arranged for a machining unit laterally next to said linear guide units (8a, 8b).

13. The apparatus according to claim 12,
characterized in that at least one of said machining units is controlled such that it produces a mirror-image involute.

14. The apparatus according to one or more of claims 4 to 13, characterized in that said cranks (1, 2, 10a, 10b) are adjustable relative to each other at a different distance of their rotational crank axis planes for producing an eccentric intersection path.

15. The apparatus according to one or more of claims 4 to 14, characterized in that said tool holder (37) performs a wobbling movement controlled in response to the workpiece movement during workpiece machining, with the theoretical point of rotation of said wobbling movement being formed by the point of intersection (SP) of the tool axis and the tangent (T) to the machining point on said workpiece.

16. The apparatus according to claim 15,
characterized in that said theoretical point of rotation of said wobbling movement of said tool holder is in the area of the larger pipe to be machined at the tangent (T) of the inner pipe diameter.

17. The apparatus according to claim 15 or 16,
characterized in that the translation of said workpiece movement into a wobbling movement of said tool holder (37) is performed via a lever parallelogram (36) which, outside of the pipe to be machined, has a point of pivot (ST) in the aixal pipe plane at the tangent to the point of intersection (SP), as well as a point of pivot (SH) in the radial pipe plane, the axial pipe movement and the radial pipe movement being transmitted to said lever parallelogram.

18. The apparatus according to one or more of claims 4 to 17, characterized in that the pivot angle of said workpiece holder (37) is variable for changing the machining angle between workpiece and tool.

19. The apparatus according to one or more of claims 4 to 18, characterized by a compensating device (59, 58, 56, 57) which keeps constant the distance of said tool relative to the pipe surface during the wobbling movement of said tool holder.

20. The apparatus according to one or more of claims 4 to 19, characterized by a control device which keeps constant the path speed of said tool relative to the workpiece surface to be machined.

21. The apparatus according to one or more of claims 4 to 20, characterized in that it is designed as a master unit which enters the motional processes into "teach-in" electronics by which these are transformed to the real dimension.

## Revendications

1. Procédé pour générer la courbe d'intersection de deux corps cylindriques à assembler, notamment de corps creux avec des diamètres différents et dans un angle quelconque moyennant deux transmissions à bielle agissant ensemble, ainsi que pour transmettre les courbes d'intersection - mouvements sur les corps cylindriques, caractérisé par
a) la formation et la disposition de deux bielles (1, 2) logées de manière flottante, si bien que celles-ci
- sont guidées de manière à être mobiles librement en direction des axes de rotation des bielles (a, b),
- ont une tige de connection respective (3, 4) réglable radialement par rapport à l'axe de rotation de la bielle, ces tiges étant logées sur la bielle respective de manière à pouvoir tourner autour de leur axe longitudinal et étant assemblées à leurs extrémités libres de manière articulable et sans jeu; en même temps
b) un mouvement des bielles (1, 2) et des tiges de connection (3, 4) correspondant à la courbe d'intersection des deux corps cylindriques est produit par le fait que la position des axes de rotation des bielles (a, b) et la distance radiale des tiges de connection (3, 4) par rapport aux axes de rotation des bielles (a, b) sont réglées en fonction de la position et des rayons des corps à assembler, et alors les bielles sont déplacées, et
c) pour marquer et/ou travailler les corps à assembler, les courbes d'intersection - mouvements des bielles (1, 2) et des tiges de connection (3, 4) sont transmis comme mouvements relatifs entre une unité d'usinage respective (W1, W2) et les corps à assembler (R1, R2) dans le secteur du parcours d'intersection.

2. Procédé selon la revendication 1, caracterisé en ce que pour produir le mouvement correspondant à la courbe d'intersection, la bielle (2) qui est ajustée à la plus petite distance radiale de la tige de connection (4) est tournée par une révolution complète.

3. Procédé selon la revendication 2,
caractérisé en ce que le mouvement de la courbe d'intersection est transmis simultanément sur le secteur du parcours d'intersection de chacun des corps à assembler.

4. Dispositif pour exécuter le procédé selon l'une ou plusieurs des revendications 1 à 3 avec deux transmissions à bielle agissant ensemble, caractérisé par deux supports de palier (9a, 9b), dont chacun a une bielle (10a, 10b); en même temps
a) les supports de palier (9a, 9b) et/ou les bielles (10a, 10b) sont guidées amoviblement dans des voies de guidage parallèles aux axes de rotation des bielles (11a, 11b),
b) les voies de guidage sont réglables entre elles dans un angle (α),
c) les bielles (10a, 10b) sont reliées entre elles par des tiges de connection (13a, 13b), lesquelles sont d'une part logées sur les bielles de manière à pouvoir tourner sur leur axe longitudinal et à être réglées radialement par rapport à l'axe de rotation de la bielle, et sont d'autre part reliées à leurs extrémités libres de manière articulable et sans jeu, et
d) des moyens sont prévus pour transmettre les courbes d'intersection - mouvements des bielles et des tiges de connection et pour générer un mouvement relatif entre les corps cylindriques et une unité d'usinage respective en fonction des courbes d'intersection.

5. Dispositif selon la revendication 4,
caractérisé par des supports de palier (9a, 9b) guidés sur des unités de guidage linéaires (8a, 8b), ces supports ayant sur un côté des bielles reliées entre elles (10a, 10b) et sur l'autre côté des dispositifs de traction, qui transmettent en un même sens le mouvement des bielles sur les corps cylindriques à travailler (18a, 18b).

6. Dispositif selon la revendication 5,
caractérisé en ce que le dispositif de traction a la forme d'un mandrin de serrage accueillant les corps cylindriques (18a, 18b) axialement par rapport à l'axe de rotation des bielles (11a, 11b).

7. Dispositif selon l'une ou plusieurs de revendications 4 à 6,
caractérisé en ce que sont prévues deux unités de guidage linéraires (8a, 8b) disposées sur un bâti de base, avec un guidage à billes et réglables angulairement entre elles sans gradation, avec indication sur une graduation.

8. Dispositif selon l'une ou plusieurs des revendications 4 à 7,
caractérisé en ce que les corps cylindriques à travailler (18a, 18b) sont logés sur des rouleaux porteurs (19) réglables en hauteur et/ou en largeur.

9. Dispositif selon l'une ou plusieurs des revendications 4 à 7,
caractérisé en ce que des coussinets sphériques (24a, 24b) servent de support aux corps cylindriques.

10. Dispositif selon l'une ou plusieurs des revendications 4 à 9,
caractérisé par au moins un galet de pression (22) tenant la pièce à travailler sur son logement.

11. Dispositif selon l'une ou plusieurs des revendications 4 à 10,
caractérisé en ce qu'au moins un rouleau porteur (19) ou un galet de pression (22) forme l'entraînement et que les pièces à travailler cylindriques (18a, 18b) ont à leurs extrémités des dispositifs de serrage (25a, 25b) qui, tangentiellement par rapport au diamètre respectif de la pièce à travailler, portent des transmissions à bielle.

12. Dispositif selon l'une ou plusieurs des revendications 4 à 11,
caractérisé en ce que pour une unité d'usinage, au moins un porte-outil (37) réglable dans sa position est disposé latéralement à côté des unités de guidage linéaires (8a, 8b).

13. Dispositif selon la revendication 12,
caractérisé en ce qu'au moins une des unités d'usinage est commandée de telle manière qu'elle trace une courbe involvante inversée.

14. Dispositif selon l'une ou plusieurs des revendications 4 à 13,
caractérisé en ce que pour tracer un parcours d'intersection excentrique, les bielles (1, 2, 10a, 10b) sont réglables entre elles avec un écart varié des plans de leurs axes de rotation des bielles.

15. Dispositif selon l'une ou plusieurs des revendications 4 à 14,
caractérisé en ce que le porte-outil (37) fait un mouvement de vacillement commandé en fonction du mouvement de la pièce à travailler pendant l'usinage de la pièce, et qu'en même temps le centre de rotation théorique du mouvement de vacillement est formé par le point d'intersection (SP) de l'axe de l'outil et de la tangente (T) au point d'usinage sur la pièce à travailler.

16. Dispositif selon la revendication 15,
caractérisé en ce que le centre de rotation théorique du mouvement de vacillement du porte-outil est situé dans le secteur du tube à travailler plus grand sur la tangente (T) du diamètre intérieur du tube interne.

17. Dispositif selon la revendication 15 ou 16,
caractérisé en ce que la transformation du mouvement de la pièce à travailler en un mouvement de vacillement du porte-outil (37) se fait par un parallélogramme de leviers (36), qui a en dehors du tube à travailler, sur la tangente au point d'intersection (SP), un point de pivotage (ST) au niveau axial du tube, ainsi qu'un point de pivotage (SH) au niveau radial du tube, le mouvement axial du tube et le mouvement radial du tube étant transmis au parallélogramme de leviers.

18. Dispositif selon l'une ou plusieurs des revendications 4 à 17,
caractérisé en ce que l'angle de pivotage du porte-outil (37) peut être modifié pour modifier l'angle d'usinage entre la pièce à travailler et l'outil.

19. Dispositif selon l'une ou plusieurs des revendications 4 à 18,
caractérisé par un dispositif de compensation (59, 58, 56, 57) tenant constante la distance de l'outil par rapport à la surface du tube pendant le mouvement de vacillement du porte-outil.

20. Dispositif selon l'une ou plusieurs des revendications 4 à 19,
caractérisé par un dispositif de commande, qui tient constante la vitesse de parcours de l'outil par rapport à la surface de la pièce à travailler.

21. Dispositif selon l'une ou plusieurs des revendications 4 à 20,
caractérisé en ce qu'il forme une unité Master, qui transmet les phases des mouvements à une électronique colloque, qui les transforme à la dimension réelle.
